# EUROPÄISCHE PATENTSCHRIFT

(11) **EP 3 064 167 B1**
(45) Veröffentlichungstag und Bekanntmachung des Hinweises auf die Patenterteilung: **25.04.2018**
(21) Anmeldenummer: 16150517.7
(22) Anmeldetag: 08.01.2016
(51) Int. Cl.: A61C 7/10

(54) **DISTRAKTIONSSET, UMFASSEND EINE VORRICHTUNG ZUR DISTRAKTION BZW. DEHNUNG VON KNOCHENSEGMENTEN**
DISTRACTION SET, COMPRISING A DEVICE FOR DISTRACTION OR ELONGATION OF BONE SEGMENTS
KIT D'EXPANSION COMPRENANT UN DISPOSITIF D'EXPANSION OU D'ÉLONGATION DE SEGMENTS OSSEUX

(30) Priorität: 05.03.2015 DE 102015103184
(43) Veröffentlichungstag der Anmeldung: 07.09.2016
(73) Patentinhaber: MEDICON EG CHIRURGIEMECHANIKER-GENOSSENSCHAFT, 78532 Tuttlingen (DE)
(72) Erfinder: Alber, Matthias, 78597 Irndorf (DE); Wangerin, Konrad, 70192 Stuttgart (DE); Burger, Andreas, 78532 Tuttlingen (DE); Widmaier, Gerd, 78532 Tuttlingen (DE)
(74) Vertreter: Mammel und Maser

(56) Entgegenhaltungen:
- EP-A2- 0 092 254
- EP-A2- 1 147 745
- WO-A1-2013/117791
- WO-A2-2006/137045
- FR-A3- 2 671 479
- US-A- 4 348 179
- "Zeichnung von A. Nardella vom 1986 }ber die Anwendung seiner VT Schraube f}r die Gaumennaht-Sprengung", ZEICHNUNG VON NARDELLA UEBER DIE ANWENDUNG SEINER VT SCHRAUBEFUER DIE GAUMENNACHT-SPRENGUNG, XX, XX, 1. Januar 1986 (1986-01-01), Seite 1, XP002956767,

## Beschreibung

Die vorliegende Erfindung betrifft ein Distraktionsset, umfassend eine Vorrichtung zur Distraktion von Knochensegmenten, insbesondere im Kieferbereich.

Besonders bei Europäern bzw. Kaukasiern bestehen schwere Fehlbisse mit einem zusätzlich zu schmalen Oberkiefer. Bei der Korrektur von Fehlbissen wird deshalb im Allgemeinen der Oberkiefer in einem ersten Schritt mit einer Vorrichtung transversal geweitet und dann ggfs. in weiteren Schritten die Anpassung des Kiefers in den anderen Dimensionen und die Anpassung der Zahnstellung vorgenommen.

Die Kieferdistraktion kann bei Kindern oder Jugendlichen vor dem Verwachsen der Gaumennaht mit kieferorthopädischen Methoden durchgeführt werden. Der Oberkiefer wird hierbei durch den Distraktor/die Dehnschraube über einen Zeitraum von wenigen Tagen gedehnt, wobei sich eine Lücke zwischen den Schneidezähnen bildet, die sich dann von selbst oder mittels einer Klammer wieder schließt. Auf diese Weise kann bei Kindern beispielsweise eine Korrektur eines Kreuzbisses erfolgen. Der Distraktor/die Dehnschraube verbleibt für die knöcherne Stabilisierung für circa 3 bis 6 Monate im Mundraum.

Bei Erwachsenen ist der Kiefer bzw. die Gaumennaht verknöchert, so dass ein kieferchirurgischer Eingriff die Öffnung der Gaumennaht chirurgisch unterstützen muss. Anschließend wird der Distraktor eingesetzt und der Oberkiefer dann nach und nach gedehnt. Hieran kann sich dann eine weitere operative oder orthopädische Kiefer- oder Zahnkorrektur anschließen.

Die Distraktion kann sowohl zahngetragen, als auch knochengetragen erfolgen.

Bei der zahngetragenen Distraktion wird die Distraktionsvorrichtung mit Metallbändern, die über die Zähne gestülpt und - falls gewünscht - zementiert werden, an den Zähnen befestigt. Diese zahngetragenen Distraktoren funktionieren an sich gut, infolge der Befestigung an den Zähnen kommt es jedoch vermehrt zu Parodontose. Zudem müssen solche zahngetragenen Distraktoren über eine lange Zeitdauer getragen werden, um die nach kurzer Zeit erreichte Dehnung des Oberkiefers auch knöchern zu stabilisieren. Ein weiterer Nachteil ist, dass die Zähne belastet werden und nicht der schmale Oberkiefer, der eigentlich gedehnt werden soll. Durch die Krafteinwirkung auf die Zähne kann es zu Zahnfehlstellungen kommen und/oder auch wieder zu einem Zusammenschnurren des gedehnten Oberkiefers in die ursprüngliche Breite.

Bei Anwendung von knochenfixierten Distraktoren wird die erhöhte Parodontosegefahr vermieden, zudem kann bei einem knochengetragenen Distraktor nach der schnellen Spreizung anschließend die kieferorthopädische Behandlung sofort weitergeführt werden. Die Krafteinleitung findet in den Kieferknochen an den für den Patienten optimalen Stellen statt. Die Distraktionsvorrichtungen, die zur transversalen Dehnung des Oberkiefers eingesetzt werden, werden im Allgemeinen auch als GNE-Dehnschrauben (GNE = Gaumennahterweiterung) bezeichnet.

Die bislang bekannten transveralen zahngetragenen Distraktoren dienen dazu, den Oberkiefer parallel zu erweitern und umfassen auf jeder Seite jeweils zwei metallische Drähte, die Retentionsarme, die in die gewünschte Position gebogen und mit den Metallbändern, die an den Zähnen befestigt werden, verbunden werden können. Die metallischen Drähte erstrecken sich von einer fest mit den Drähten verbundenen Platte nach außen. In jeder der beiden Platten ist eine Bohrung vorgesehen, die ein Schraubgewinde aufnimmt. Da die Drehrichtung der beiden Schraubgewinde verschieden ist, können die beiden Platten mit den daran befestigten Drähten bei Betätigung des Gewindeantriebs auf beiden Seiten des Gewindeantriebs nach außen gespreizt werden.

Die Anpassung eines solchen transversalen zahngetragenen Distraktors erfolgt wie folgt. In einem ersten Termin macht der Kieferchirurg oder Kieferorthopäde einen Abdruck des Oberkiefers. Der Zahntechniker oder das Dentallabor erstellen auf der Grundlage des Abdrucks ein Gipsmodell. An dem Gipsmodell wird dann der Distraktor vom Zahntechniker gefertigt, in dem die Metallbänder auf die Zähne des Gipsmodells aufgesteckt, die Drähte entsprechend geformt und mit den Zahnbändern verschweißt oder verlötet werden. Der Distraktor wird dann vom Kieferorthopäden oder Kieferchirurg beim Patienten im nächsten Termin eingesetzt.

Der Patient erhält einen Schlüssel, mit dem er jeden Tag durch Betätigung des Gewindes den Distraktors selbst geringfügig aufspreizen kann. Auf diese Weise kann der Oberkiefer innerhalb weniger Tage beträchtlich (bis zu 12 mm) erweitert werden.

Weiterhin ist eine Gaumennahterweiterungsapparatur mit der so genannten Nardella-Schraube bekannt. Diese Distraktionsvorrichtung umfasst zwei Gewindeantriebe (anterior und posterior). Die rechten Enden des anterioren und posterioren Gewindeantriebs enden in einem rechten Plastikteil, die linken Enden des anterioren und posterioren Gewindeantriebs enden in einem linken Plastikteil. An einem jeden Plastikteil sind zwei Retentionsarme aus Draht befestigt, die sich nach außen erstrecken.

Der Nardella-Distraktor kann vom Zahntechniker mit Wachs auf dem Gipsmodell fixiert werden, um den Draht bündig an den beiden Bändern entlang zur Retention des Distraktors zu führen. Wenn dieser Vorgang beidseitig durchgeführt ist, wird die Apparatur mit den Zahnbändern verschweißt oder verlötet und an den Kieferorthopäden zum folgenden Einsetzen übermittelt.

Nachdem der Distraktor anterior und posterior ein Gewinde aufweist, kann er anterior und posterior gleichmäßig (parallel) oder individuell unterschiedlich aufgeschraubt werden. Wird der Distraktor beispielsweise posterior stärker aufgeschraubt als anterior, so verbiegt sich der Kunststoff. Nachteilig an diesem Distraktor ist, dass die Kraftübertragung schlecht ist, und dass starke Kräfte auf die sich verbiegenden Kunststoffteile wirken können, was zu Bruch des Kunststoffs führen kann. Nachteilig ist auch, dass es schwierig ist, eine gleichmäßige Dehnung zu erzielen.

Die EP 0 092 254 A2 lehrt eine Doppelschraube für einen kieferorthopädischen vierteiligen Aktivator, bei der die vier Aktivatorteile tragenden Schrauben durch einen Steg verbunden sind, zur gleichzeitigen unabhängigen Dehnung des Ober- und Unterkiefers unter Vergrößerung des Zungenfreiraums. Der Steg ist zweiteilig ausgebildet und die Stegteile durch ein Gelenk miteinander verbunden, dessen Schwenkachse parallel zu den Schraubenachsen verläuft.

Aus WO 2006/137 045 A2 ist eine Vorrichtung zur Weitung eines Kiefers bekannt. Ein Führungselement mit einem Mittelsteg verbindet zwei Gewindestangen miteinander. Durch Drehung der Gewindestangen werden zwei Retentionskörper voneinander weggespreizt.

In der US 5 895 387 A ist eine Distraktionsvorrichtung beschrieben, die zwei gleichläufige Gewindestangen und zwei Retentionskörper aufweist, die über Führungen verbunden sind.

Weitere Distraktionsvorrichtungen sind aus DE 42 19 156 A1 und FR 2 671 479 A3 bekannt.

Die Aufgabe der vorliegenden Erfindung besteht darin, ein Distraktionsset, das eine Vorrichtung zur Distraktion umfasst, anzugeben, die der Kieferorthopäde/-chirurg selbst an den Kiefer des Patienten anpassen kann und die gleichzeitig eine gleichmäßige Dehnung des Kiefers ermöglicht

Diese Aufgabe wird erfindungsgemäß dadurch gelöst, dass die Distraktionsvorrichtung des Distraktionssets ein Führungselement, das einen Mittelsteg und auf jeder Seite des Mittelstegs wenigstens einen sich rechtwinklig erstreckenden Seitensteg aufweist sowie zwei Gewindestangen und wenigstens vier Retentionskörper. Jeder Retentionskörper weist wenigstens einen Retentionsarm auf. In jedem Retentionskörper sind eine Bohrung mit einem Innengewinde zur Aufnahme eines Schraubgewindes einer Gewindestange und eine weitere Bohrung, durch die ein Seitensteg des Führungselements geführt ist. Durch eine Betätigung einer Gewindestange können nun die mit der Gewindestange verbundenen Retentionskörper seitlich nach außen gedehnt werden.

Nachdem die erfindungsgemäße Vorrichtung nicht nur eine sondern zwei getrennt voneinander betätigbare Gewindestangen aufweist, kann die Dehnung im anterioren und im posterioren Gaumenbereich unterschiedlich eingestellt werden und so eine gegenüber den bislang bekannten Distraktoren individuellere Distraktion des anterioren und posterioren Kieferbereichs erzielt werden.

Im Gegensatz zu der Nardella-Schraube ist das Führungselement des erfindungsgemäßen Distraktors steif und unverbiegbar. Bei der erfindungsgemäßen Vorrichtung sind die Gewindegänge der beiden Enden der Gewindestangen gegenläufig, so dass bei der Drehung der Gewindestange die beiden Retentionskörper in Bezug auf die Achse des Mittelstegs symmetrisch nach außen oder innen bewegt werden. Im Gegensatz zu der Nardella-Schraube erfolgt die seitliche Bewegung der Retentionskörper rechtwinklig zu dem Mittelsteg entlang dem Seitensteg, der als Führung dient, so dass die Einwirkung nicht-transversaler Kräfte, eine asymmetrische Dehnung etc. auf den Kiefer vermieden werden.

Aufgrund der individuellen Verstellmöglichkeit der beiden Gewindestangen sollten die Retentionsarme mit ihren Enden gelenkig mit den am Kieferknochen oder den Zähnen vorgesehenen Befestigungsmitteln verbunden sein, denn nur so kann die Einwirkung von unerwünschten zusätzlichen Kräften auf den Kiefer oder die Zähne vermieden werden.

Die Retentionsarme können sich in Längsrichtung erstrecken. In einer Variante der Erfindung ist vorgesehen, dass sich die Retentionsarme in Querrichtung, vorzugsweise als Verlängerung zu den Seitenstegen, erstrecken.

Ein besonderer Vorteil der vorliegenden Erfindung besteht darin, dass die erfindungsgemäße Vorrichtung individuell vom Kieferchirurg oder -orthopäden in einem Termin angepasst und in den Gaumen des Patienten eingesetzt werden kann, ohne dass es erforderlich ist, einen Abdruck anzufertigen, vom Dentallabor oder vom Zahntechniker ein Modell anfertigen zu lassen und aufgrund des Modells dann eine passende Distraktionsvorrichtung anpassen zu lassen.

Unabhängig davon ist mit dem erfindungsgemäßen Distraktor selbstverständlich auch der konventionelle Ablauf mit Abdruck und Zahntechniker/Dentallabor möglich.

In dem einen Termin beim Kieferchirurg oder -orthopäden werden zunächst die vier Schrauben im Kiefer des Patienten implantiert und die Hülsen auf die Schraubenköpfe aufgesteckt oder aufgeklipst. Anschließend wird die Distraktionsvorrichtung in den Kieferraum eingebracht und die Retentionsarme entsprechend gebogen. Nun werden die Enden der Retentionsarme fest mit den Hülsen verbunden, insbesondere verschweißt, verlötet, verklebt oder verpresst. Damit ist die Distraktionsvorrichtung über vier an den Enden der Retentionsarme befestigte Hülsen mit den Schrauben im Kiefer (oder den Zahnbändern) verbunden.

Optional können bei dem konventionalen Ablauf die vier Schrauben unter Lokalanästhesie implantiert werden.

Zur vorzugsweise intraoralen Anpassung der Distraktionsvorrichtung wird erfindungsgemäß ein Set bereitgestellt, das neben der erfindungsgemäßen Distraktionsvorrichtung auch Schrauben und Hülsen umfasst, wobei die Hülsen dazu dienen, nach der Implantation der Schrauben über die Schraubenköpfe gestülpt zu werden und das der Hülsenöffnung gegenüberliegende Ende der Hülse anschließend mit den Enden der Retentionsarme intraoral verschweißt zu werden. Besonders bevorzugt ist, dass Schraubenkopf und Hülse ein Kugelgelenk bilden, das eine Bewegung der Hülse gegenüber der Schraube in drei Raumrichtungen in einem Kugelgelenk ermöglicht.

Die erfindungsgemäße Distraktionsvorrichtung kann im Kindes- und Jugendalter von einem Kieferorthopäden oder im Erwachsenenalter operativ von einem Kieferchirurg wie folgt eingesetzt werden.

Ein schmaler Oberkiefer kann vom Kieferorthopäden bereits im Wachstumsalter ab ca. 10 Jahren transversal geweitet werden. Da die Verknöcherung des Oberkiefers zu diesem frühen Zeitpunkt noch nicht abgeschlossen ist, kann er in Lokalanästhesie nach Eindrehen von je zwei Kugelkopfschrauben beidseits in den knöchernen Gaumen an diesen vier Kugelköpfen die erfindungsgemäße Distraktionsvorrichtung mit den zwei Gewindestangen in der Mitte des Gaumens befestigen, die beim schrittweisen Dehnungsvorgang (ca. 0,5 - 1 mm pro Tag) die noch nicht stabil verknöcherten Nähte zwischen den einzelne Oberkieferknochen sprengt und so den Oberkiefer transversal weitet (sogenannte Gaumennaht-erweiterung GNE oder -sprengung). Je nach Geschwindigkeit und Ausmaß der Dehnung dauert der Vorgang ein bis zwei Wochen. Aufgrund der Mechanik und der zwei Gewindestangen ist es möglich, unabhängig voneinander sowohl im vorderen als auch im hinteren Bereich des Gaumens eine individuelle transversale Aufdehnung des Oberkiefers vorzunehmen: z.B. vorne eine größere Dehnung als hinten oder umgekehrt. Es entsteht dabei im Gaumen ein knöcherner Spalt im Bereich der auseinander gesprengten Knochennähte, der erst innerhalb der folgenden Monate durchwachsen bzw. vom Körper repariert wird. Deshalb verbleibt die gesamte Apparatur auch für ca. 3 bis 6 Monate zur Retention im Gaumen. Anschließend werden die Kugelkopfschrauben in Lokalanästhesie und die erfindungsgemäße Distraktionsvorrichtung vom Kieferorthopäden entfernt. Die bei der Prozedur entstehende Lücke zwischen den oberen mittleren Schneidezähnen schließt sich zum Teil spontan während der Retentionszeit oder wird vom Kieferorthopäden mit kieferorthopädischen Apparaturen vollständig geschlossen.

Im Erwachsenenalter erfolgt die oben angegebene Prozedur in gleicher Weise. Allerdings sind die Knochennähte im Gaumen aufgrund des beendeten Wachstumsvorgangs vollständig verknöchert und müssen vor der Dehnung erst operativ durchtrennt werden. Diese Prozedur erfolgt in Allgemeinnarkose und wird in der Regel von einem Mund-, Kiefer-, Gesichtschirurgen durchgeführt. Nach einem Schleimhautschnitt im Oberkiefervorhof wird der Oberkiefer in Höhe des LeFort I Levels horizontal beidseits durchtrennt, der Nasensporn in der Mitte wird winkelförmig abgetrennt und bleibt an der Nasenscheidewand (oben) gestielt. Mit einem Meißel wird anschließend der Oberkiefer in der Mitte sagittal gespalten. Dann folgt ein Schleimhautschnitt in der Mitte des Gaumens von vorn bis hinten und dann seitliches Unterminieren dieser Schleimhaut beidseits, bis man mit einer dünnen Säge den Gaumenknochen paramedian beidseits durchtrennt. Nun sind die beiden seitlichen Oberkieferteile völlig mobil und hängen nur noch an der dünnen knöchernen Wand der seitlichen Nasenbegrenzung. Die Schleimhautschnitte werden durch Nähte verschlossen und dann erfolgt das zuvor beschriebene Eindrehen der Kugelkopfschrauben und Fixierung der individuellen Distraktionsvorrichtung.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 die Draufsicht auf eine erste Variante der erfindungsgemäßen Distraktionsvorrichtung,
Figur 2 eine Seitenansicht auf die linke Seite der Vorrichtung aus Figur 1,
Figur 3 die Draufsicht auf eine zweite Variante der erfindungsgemäßen Distraktionsvorrichtung,
Figur 4 eine Gewindehülse in perspektivischer Ansicht,
Figur 5 einen Schnitt durch die Gewindehülse aus Figur 4,
Figur 6 eine Schraube in der Seitenansicht,
Figur 7 die Schraube mit der schwenkbaren Gewindehülse (ohne Verbindungsstück 48) in zwei Positionen,
Figur 8 eine Positionierhilfe für das Ausrichten der Hülsen auf den Schrauben (mit und ohne Hülse und Schraube),
Figur 9 eine Zeichnung eines teilweise durchtrennten Kiefermodells mit vier Schrauben, an denen die vier mit der Distraktionsvorrichtung verschweißten Hülsen befestigt sind und

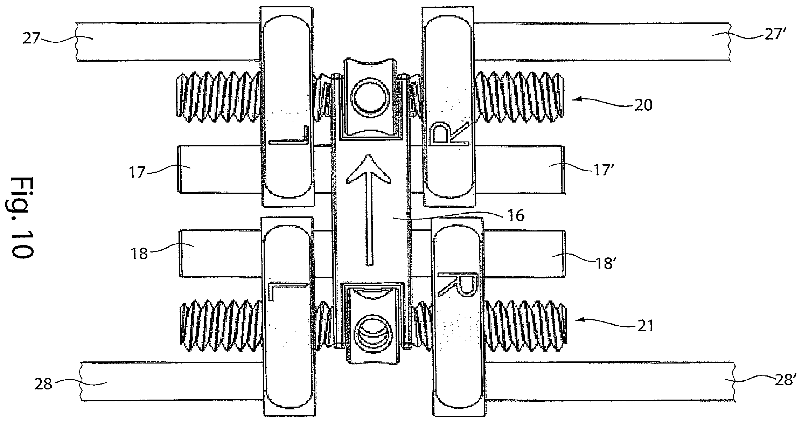

Figur 10 eine dritte Variante mit sich in Querrichtung erstreckenden Retentionsarmen.

Die erfindungsgemäße Distraktionsvorrichtung umfasst einen Führungssteg 15, der mit zwei Gewindestangen 20, 21 verbunden ist. Weiterhin umfasst die Distraktionsvorrichtung vier Retentionskörper 25, 25', 26, 26', die durch Betätigung der einen und/oder anderen Gewindestangen 20, 21 symmetrisch der Längsachse L seitlich nach außen gespreizt werden können.

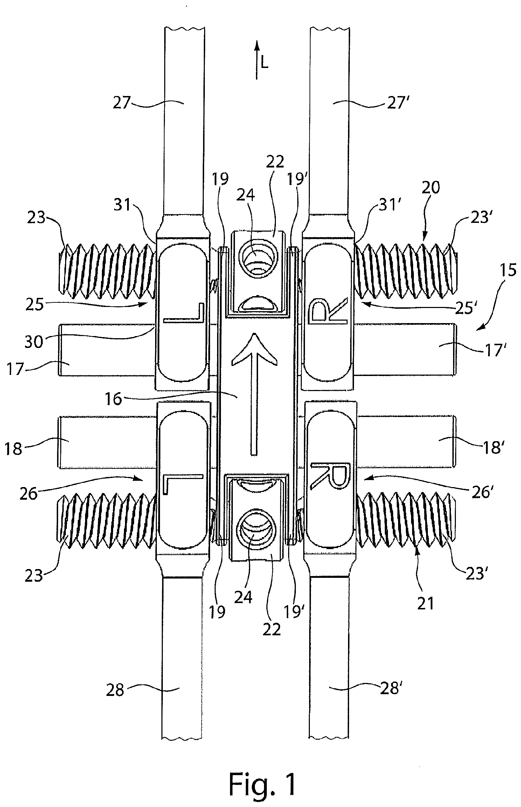

Das Führungselement 15 umfasst einen Mittelsteg 16 und in der in Figur 1 dargestellten Ausführungsform auf der rechten und linken Seite jeweils zwei Seitenstege 17, 17', 18, 18', die sich unter einem rechten Winkel gegenüber dem Mittelsteg 16 erstrecken. Das Führungselement 15 ist spiegelsymmetrisch der Längsachse L und besitzt in der Darstellung gemäß der Figur 1 die Form eines liegenden "H". Die sich in Figur 1 auf der linken Seite befindlichen Seitenstege werden mit 17, 18 gekennzeichnet und korrespondieren jeweils mit den sich auf derselben in Längsrichtung L gemessenen Höhe befindlichen Seitenstegen auf der rechten Seite 17', 18'. Das Führungselement 15 ist einstückig ausgebildet und besitzt eine steife Anordnung. Am oberen und am unteren Ende des Mittelstegs 16 befinden sich jeweils zwei Laschen 19, 19', die den Einstellknopf 22 der Gewindestangen 20, 21 in der Längsrichtung L fixieren. Die Gewindestangen 20, 21 sind in den Laschen 19, 19' drehbar gelagert.

Die Seitenstege 17, 17', 18, 18' sind zylinderförmig, die anterioren Stege 17, 17' und die posterioren Stege 18, 18' besitzen jeweils eine gemeinsame Zylinderachse, die parallel zueinander verlaufen.

Die Seitenstege 17, 17', 18, 18' dienen als Führungsstege der Retentionskörper 25, 25', 26, 26', wenn diese infolge der Drehung der Gewindestangen 20, 21 gegenüber dem Mittelsteg 16 seitlich gespreizt werden.

Falls gewünscht, kann ein Anschlag vorgesehen sein, zum Beispiel durch Schweißpunkte oder Verpressen des Gewindes am seitlichen Ende der Gewindestangen 20 und 21.

Durch eine Drehbewegung auf den Einstellknopf 22 in Richtung des in Figur 1 eingezeichneten Pfeils auf den Mittelsteg 16 können die Gewindestangen 20, 21, die jeweils in den beiden Laschen 19, 19' an dem Mittelsteg 16 gehalten werden, um ihre Drehachse gedreht werden. Jede Gewindestange 20, 21 besitzt auf der linken Seite ein Außengewinde 23, dessen Gewindegänge dem Außengewinde 23' auf der rechten Seite gegenläufig sind. Mittig zwischen den beiden gegenläufigen Außengewinden 23, 23' befindet sich der Einstellknopf 22. Die Steigung der beiden Gewinde 23, 23' ist gleich, so dass bei einer Drehung des Einstellknopfes 22 um die Drehachse der Gewindestange 20, 21 die Drehbewegung gleichmäßig auf das rechte und linke Außengewinde 23, 23' übertragen wird.

Die Gewindestangen 20, 21 sind vorzugsweise Transversalgewinde.

Dadurch, dass die erfindungsgemäße Distraktionsvorrichtung zwei voneinander unabhängige Gewindestangen 20, 21 aufweist, kann der Kiefer anterior und posterior unterschiedlich stark gedehnt werden.

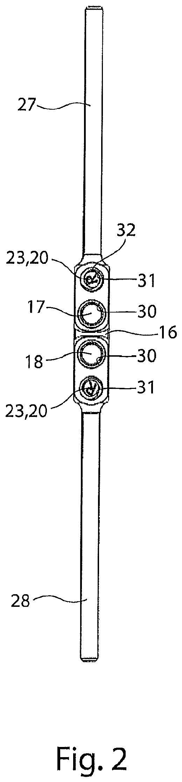

Die Retentionskörper 25, 25', 26, 26' besitzen an ihrem in Richtung des Führungselements 15 gerichteten Ende jeweils eine runde Bohrung 30 (vgl. Figur 2), in der die Seitenstege 17, 17', 18, 18' des Führungselements 15 geführt sind, so dass die Retentionskörper 25, 25', 26, 26' entlang den Seitenstegen 17, 17', 18, 18' verschiebbar sind.

Die Retentionskörper 25, 25', 26, 26' weisen noch eine weitere Bohrung 31 auf, die sich benachbart der ersten Bohrung 30 in Richtung der Retentionsarme 27, 27', 28, 28' befindet und die ein Innengewinde 32, 32' aufweist, das zu einem Außengewinde 23, 23' einer Gewindestange 20, 21 korrespondiert.

Bei Drehung des Einstellknopfes 22 werden durch die Drehbewegung der Gewindestange 20, 21 die beiden Außengewinde 23, 23' mit ihren entgegengesetzten Drehrichtungen in Rotation versetzt und dadurch die auf den Außengewinden 23, 23' geschraubten Retentionskörper 25, 25', 26, 26' spiegelsymmetrisch der Längsache L seitlich nach außen bewegt. Während der durch die Gewindestange 20, 21 angetriebenen seitlichen Bewegung gleiten die Retentionskörper 25, 25', 26, 26' auf dem seitlichen Steg 17, 17', 18, 18' nach außen, wobei die seitlichen Führungsstege 17, 17', 18, 18' ein Verkanten verhindern.

Die Achsen der seitlichen Stege 17, 17', 18, 18' und der Gewindestangen 20, 21 verlaufen parallel zueinander und rechtwinklig der Längsachse L und der Längsachse des Mittelstegs 16.

In einer anderen Variante sind die Mittelstege schwächer als die Seitenstege ausgebildet.

Die Einstellknöpfe 22 am anterioren und posterioren Ende des Führungsstegs 15 sind unabhängig voneinander bedienbar, so dass beispielsweise die Retentionskörper 25, 25' am anterioren (oberen) Ende in Figur 1 weniger gedehnt werden können als die Retentionskörper 26, 26' am posterioren (unteren) Ende des Führungsstegs 15 und umgekehrt.

Für eine einfache Bedienung weisen die beiden Einstellknöpfe 22 entlang ihrem Umfang wenigstens ein, vorzugsweise mehrere Einstelllöcher 24 auf, in die ein hakenförmiges Bedieninstrument eingreifen und eine Drehbewegung einleiten kann.

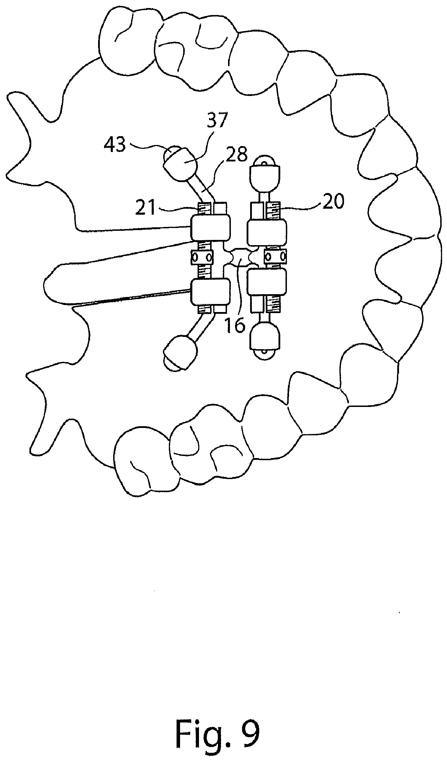

An den den Bohrungen 30, 31 gegenüberliegenden Enden des Retentionskörpers 25, 25', 26, 26' sind Retentionsarme 27, 27', 28, 28' vorgesehen. Die Retentionskörper 25, 25', 26, 26' sind an sich steif, die Retentionsarme 27, 27', 28, 28' können jedoch für die spätere Befestigung am Kieferknochen (oder an den Zähnen) (vgl. Fig. 9) in die gewünschte Position gebogen werden.

Die Retentionsarme 27, 27', 28, 28' verlaufen parallel zueinander und parallel der Längsachse L und rechtwinklig zu den Seitenstegen 17, 17', 18, 18' oder parallel zu den Gewindestangen 20 und 21. Die Länge der Retentionsarme 27, 27', 28, 28' ist variabel. In einer bevorzugten Variante sind die Retentionsarme 27, 27', 28, 28' wenigstens so lang wie die Seitenstege 17, 18 und vorzugsweise wenigstens doppelt so lang.

Damit die beiden Gewindestangen 20, 21 der Distraktionsvorrichtung unabhängig voneinander betätigt und die Retentionsarme 27, 27' unabhängig von den Retentionsarmen 28, 28' aufgespreizt werden können, müssen die Enden der Retentionsarme 27, 27', 28, 28' gelenkig mit dem Kieferknochen (oder den Zähnen) verbunden werden.

Aus diesem Grund ist es in einer bevorzugten Ausführungsform vorgesehen, dass an den Enden der Retentionsarme 27, 27', 28, 28' Hülsen 37 befestigt werden, die zusammen mit den Köpfen 43 der im Kieferknochen befestigten Schrauben 41 ein Gelenk bilden.

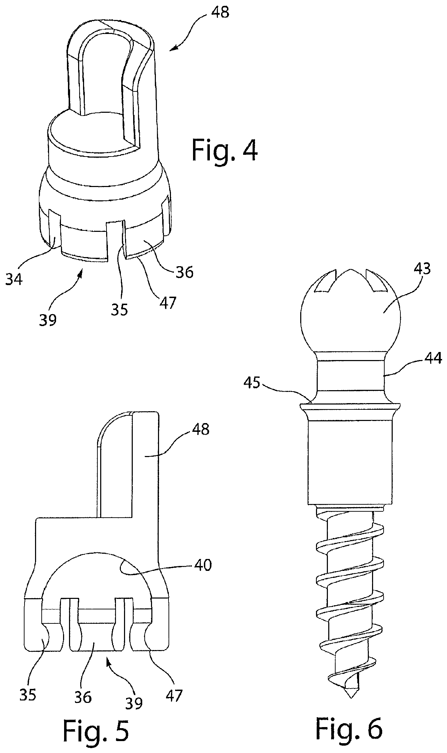

In einer bevorzugten Ausführungsform bilden Hülse 37 und Schraubenkopf 43 der Schraube 41 ein Kugelgelenk (vgl. Fig. 4 bis 7); dabei ist die Hülse 37 in ihrem Inneren in Form einer Kugelpfanne 40 ausgebildet und der Schraubkopf 43 weist Kugelform auf, so dass die Hülse 37 über den Schraubenkopf 43 gestülpt und gegenüber der Achse der Schraube 41 in drei Achsen rotativ bewegt werden kann.

Die Hülsen 37 weisen an ihrem der Hülsenöffnung 39 gegenüberliegenden Ende 47 ein Verbindungsstück 48 auf, das dem besseren Verschweißen oder Verkleben dient. Das Verbindungsstück 48 kann eine schalenförmige oder halbschalenförmige Aufnahme sein, in die das Ende eines Retentionsarmes 27, 27', 28, 28' hineingesteckt und anschließend verschweißt, verpresst oder verklebt werden kann.

Die Köpfe 43 der Schrauben 41 sind kugelförmig ausgebildet (vgl. Fig. 6). Die Hülsen 37 (vgl. Fig. 4 und 5) weisen in ihrem Inneren einen halbkugelförmigen Innenraum 40 auf. Die Hülsen 37 besitzen randoffene Ausnehmungen 34. Hierdurch werden Laschen 36 gebildet, die gleichmäßig über den Umfang der Hülse 37 verteilt sind. Die Laschen 36 besitzen nach innen weisende Nasen 35. Wird eine Hülse 37 über einen runden Schraubenkopf 43 geschoben, so werden die Laschen 36 radial nach außen gedrückt. Nach Überschreiten des Schraubenkopfäquators federn die Laschen 36 in die Ausgangslage zurück und die Nasen 35 hintergreifen den Schraubenkopfäquator, so dass der Kugelkopf 43 der Schraube 41 nun fest in der Kugelpfanne 40 sitzt.

Zudem ist möglich, die Hülse auf die Schraube aufzuschrauben, die Hülse nur aufzusetzen oder eine Klick-Verbindung vorzusehen.

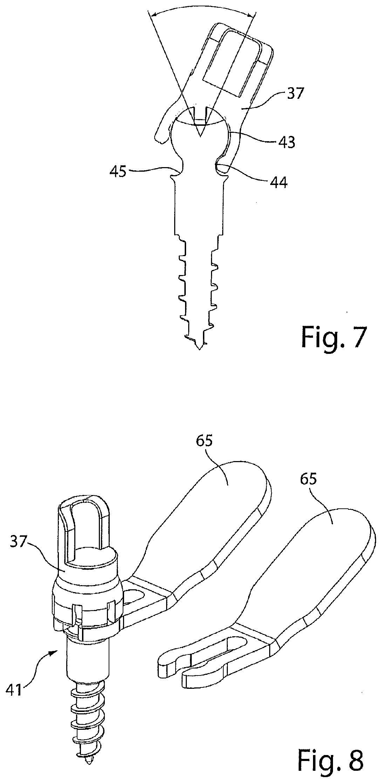

An den kugelförmigen Schraubenkopf 43 der Schraube 41 schließt sich ein längerer schmaler Hals 44 an, der in einem Kragen 45 endet. Der Hals 44 ermöglicht, dass ein Schraubenkopf 43 gegenüber der Neutralposition, das ist die Position, in der die Enden der Laschen 36 alle denselben Abstand gegenüber dem Kragen 45 aufweisen und die Hülsenachse der Schraubenachse entspricht, auf jede Seite um einen Winkel von wenigstens 10° ausgelenkt werden kann, vgl. Figur 7.

Die Schrauben 41 sind vorzugsweise selbstbohrend und können ohne Vorbohrung in den Gaumen des Patienten implantiert werden.

Die Schrauben 41 und die Distraktionsvorrichtung sind vorzugsweise aus Titan oder einer Titanlegierung, die sich im biologischen Umfeld als biokompatibel und nicht toxisch erweist. Eine praktisch artefaktfreie Bildgebung ist gegeben. Zudem kann Titan intraoral geschweißt werden.

Zudem können die Distraktionsvorrichtung und/oder die Hülse 37 auch aus Edelstahl sein.

Zudem ist es möglich, dass die Schrauben 41 und/oder die Hülsen 37 und/oder die Distraktionsvorrichtung aus Titan, einer Titanlegierung oder Edelstahl sind.

In einer bevorzugten Ausführungsform setzt der Kieferchirurg zunächst vier Schrauben 41 durch Eindrehen der Schrauben unter Narkose durch die Schleimhaut direkt in den festen Gaumen ein, wobei die Lage der Nerven und Zahnwurzeln selbstverständlich berücksichtig werden muss. Anschließend werden die Hülsen 37 auf die Schraubenköpfe 43 aufgesteckt bzw. eingerastet, wobei die in Figur 8 dargestellte Positionierhilfe 65 verwendet werden kann, die den Rand der Hülsenöffnung 39 parallel zu dem Kragen 45 der Schraube 41 ausrichtet. Nun wird die Distraktionsvorrichtung im Mund des Patienten positioniert und die Retentionsarme 27, 27', 28, 28' in Richtung der auf den Schrauben 41 aufgesteckten Hülsen 37 gebogen. Mit einem jeden Ende eines Retentionsarms 27, 27', 28, 28' wird im Mund des Patienten nun eine Hülse 37 an ihrem Verbindungsstück 48 verschweißt.

Die Distraktionsvorrichtung ist dann an den vier Schrauben 41 mittels der an den Retentionsarmen 27, 27', 28, 28' befestigten Hülsen 37 verdrehbar in der Gelenkpfanne 40 der Hülse 37 gehalten. Werden nun beispielsweise die posterioren Retentionsarme 28, 28' stärker gedehnt als die anterioren Retentionsarme 27, 27', so kann die Hülse 37 gegenüber dem Schraubenkopf 43 in die richtige Position geschwenkt und damit eine unterwünschte Krafteinwirkung auf den Kiefer vermieden werden.

Eine gelenkige Befestigung zwischen den Retentionsarmen 27, 27', 28, 28' und den Befestigungsmitteln am Kiefer (oder an den Zähnen) kann auch dadurch erzielt werden, dass der Schraubenkopf 43 eine Hülse 37 aufweist und ein Kugelkopf mit Hals am Ende eines jeden Retentionsarms 27, 27', 28, 28' befestigt wird. Zudem kann eine gelenkige Befestigung zwischen Schraube 41 und Retentionsarm 28, 27', 28, 28' auch durch andere Gelenke wie zum Beispiel Scharniergelenke, Walzengelenke, Sattelgelenke, Zapfengelenke oder Eigelenke erreicht werden.

Da die Anpassung und Positionierung der Distraktionsvorrichtung durch den Kieferchirurg auf einfache Weise direkt im Mund des Patienten erfolgen kann, ist es nicht mehr erforderlich, zunächst einen Abdruck zu nehmen und vom Zahntechniker oder Dentallabor anhand eines Gipsmodells eine individuelle Distraktionsvorrichtung anpassen zu lassen. Vielmehr ist es mit der erfindungsgemäßen Distraktionsvorrichtung möglich, dass der Kieferchirurg oder -orthopäde nach Setzen der Schrauben 41 im Mund des Patienten die Distraktionsvorrichtung an die individuellen Gegebenheiten intraoral anpasst, in dem die Hülsen 37 auf die Schraubenköpfe 43 aufgeklipst und die Enden der Retentionsarme 27, 27', 28, 28' mit den Hülsen 37 an ihren Verbindungsstücken 48 verschweißt oder anderweitig verbunden werden.

Somit kann der Arzttermin mit der Abdruckerstellung entfallen und die Kosten für die Anfertigung des Gipsmodells beim Zahntechniker und der Transfer von Modellen und Distraktionsvorrichtungen zwischen Arzt und Zahntechniker mit den damit verbundenen Wartezeiten können vermieden werden.

Bei der in Figur 9 dargestellten weiteren Variante erstrecken sich die Retentionsarme 27, 27', 28, 28' in Querrichtung, das heißt senkrecht zu dem Mittelsteg 16.

Ist die Distraktionsvorrichtung vom Kieferchirurgen oder Kieferorthopäden eingesetzt, wie es auf der Zeichnung gemäß Figur 9 dargestellt ist, so kann der Patient die Distraktionsvorrichtung Tag für Tag geringfügig weiter dehnen, indem er mit einem Bedieninstrument, das beispielsweise an seinem Ende einen hakenförmigen Draht aufweisen kann, in die Einstelllöcher 24' des anterioren und posterioren Einstellknopfes 22 greift und einen jeden Einstellknopf 22 und damit eine jede Gewindestange 20, 21 geringfügig dreht und damit die anterioren 25, 25' und posterioren 26, 26' Retentionskörper geringfügig dehnt.

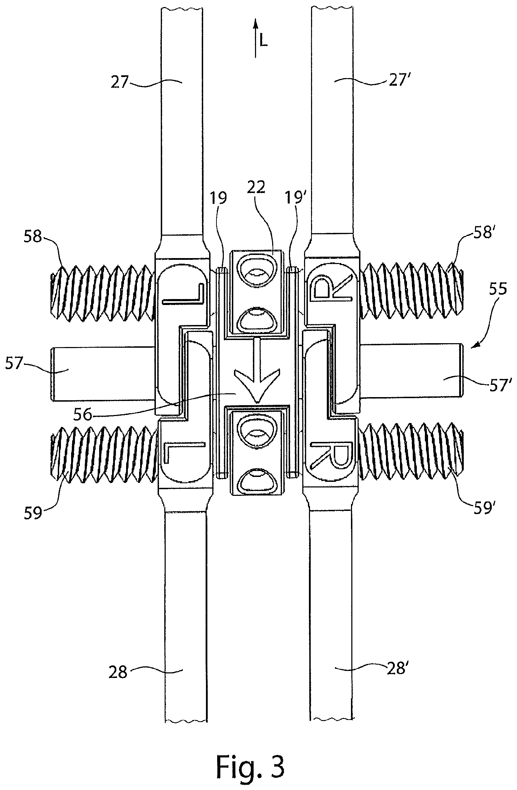

Eine weitere Variante der erfindungsgemäßen Distraktionsvorrichtung ist in Figur 3 dargestellt. Anstelle der zuvor beschriebenen Distraktionsvorrichtung, die in den Figuren 1 und 2 dargestellt ist, besitzt bei dieser Variante das Führungselement 55 einen Mittelsteg 56 und nur jeweils einen nach links und einen nach rechts weisenden Seitensteg 57, 57'. Die Seitenstege 57, 57' sind ebenfalls zylinderförmig und dienen der Führung der Retentionselemente 27, 27'; 28, 28'. Das Führungselement 55 ist ebenfalls bezüglich der Längsachse L symmetrisch. Im Gegensatz zu der zuvor beschriebenen Variante dient jeder Seitensteg 57, 57' jedoch zur Führung von zwei Retentionskörpern 27, 28; 27', 28'. An dem linken Seitensteg 57 sind die linken anterioren und posterioren Retentionskörper 27, 28 und an dem rechten Seitensteg 57' sind die anterioren und posterioren Retentionskörper 27', 28' geführt. Nachdem in dieser Variante zwei Retentionskörper 27, 28; 27', 28' jeweils an einem Seitensteg 57, 57' befestigt sind und Enden der anterioren Retentionskörper 27, 27' in seitlicher Richtung außerhalb der Enden der posterioren Retentionskörper 28, 28' zu liegen kommen, können die anterioren Retentionskörper 27, 27' stärker als die posterioren Retentionskörper 28, 28' gedehnt werden. Wie in Figur 3 dargestellt, ist es jedoch in dieser Variante möglich, entweder alle Retentionskörper 27, 27', 28, 28' in gleichem Maße zu dehnen oder die anterioren Retentionskörper 27, 27' stärker zu dehnen als die posterioren Retentionskörper 28, 28'.

Die Apparatur kann bei dieser Lösung auch umgekehrt in den Gaumen eingesetzt werden, so dass posterior stärker gedehnt werden kann als anterior. Je nach anatomischen Gegebenheiten kann die Positionierung der Apparatur entsprechend gewählt werden, so dass dann wahlweise anterior oder posterior stärker gedehnt werden kann.

## Patentansprüche

1. Distraktionsset, umfassend eine Vorrichtung zur Distraktion von wenigstens zwei Knochensegmenten im Kiefer-, Gesichts- und Schädelbereich mit einem Führungselement (15; 55), das einen Mittelsteg (16; 56) und auf jeder Seite des Mittelstegs (16, 56) wenigstens einen sich rechtwinklig erstreckenden Seitensteg (17, 17', 18, 18'; 57, 57') aufweist,
mit einer ersten (20; 58) und einer zweiten (21; 59) Gewindestange, wobei eine jede Gewindestange (20, 21; 58, 59) zwei gegenläufige Gewindegänge (23, 23') aufweist,
und mit wenigstens vier Retentionskörpern (25, 25', 26, 26'), wobei jeder Retentionskörper (25, 25', 26, 26') wenigstens einen Retentionsarm (27, 27', 28, 28') aufweist, jeder Retentionskörper (25, 25', 26, 26') eine Bohrung (31) mit einem Innengewinde (32) zur Aufnahme eines Schraubgewindes (23, 23') einer Gewindestange (20, 21) aufweist und jeder Retentionskörper (25, 25', 26, 26') eine weitere Bohrung (30) aufweist, durch die sich ein Seitensteg (17, 17', 18, 18'; 57, 57') des Führungselements (15, 55) erstreckt,
und wobei durch Drehung der Gewindestangen (20, 21) jeweils die mit der Gewindestange (20, 21) verbundenen Retentionskörper (27, 27', 28, 28') seitlich nach außen spreizbar sind.

2. Distraktionsset nach Anspruch 1, **dadurch gekennzeichnet, dass** die Retentionskörper (25, 25', 26, 26') der Vorrichtung an sich steif sind und die Retentionsarme (27, 27', 28, 28') für die spätere Befestigung am Kieferknochen oder an den Zähnen in die gewünschte Position gebogen werden können.

3. Distraktionsset nach einem der Ansprüche 1 oder 2, **dadurch gekennzeichnet, dass** die Vorrichtung in Bezug auf die Längsachse L spiegelsymmetrisch ist.

4. Distraktionsset nach einem der vorangegangenen Ansprüche, **dadurch gekennzeichnet, dass** an dem posterioren und dem anterioren Ende des Mittelstegs (16) der Vorrichtung Laschen (19, 19') angeformt sind und jede Gewindestange (20, 21) einen Einstellknopf (22) aufweist, und die Einstellknöpfe (22) der Gewindestangen (20, 21) an den Laschen (19, 19') drehbar gelagert sind.

5. Distraktionsset nach einem der Ansprüche 2 bis 4, **dadurch gekennzeichnet, dass** die Gewindestangen (20, 21) der Vorrichtung parallel der Seitenstege (17, 17', 19, 19'; 57, 57') und diese rechtwinklig zu den Retentionsarme (27, 27', 28, 28') verlaufen.

6. Distraktionsset nach einem der Ansprüche 2 bis 4, **dadurch gekennzeichnet, dass** die Gewindestangen (20, 21) der Vorrichtung parallel der Seitenstege (17, 17', 19, 19'; 57, 57') und diese parallel zu den Retentionsarmen (27, 27', 28, 28') verlaufen.

7. Distraktionsset nach einem der Ansprüche 2 bis 5, wobei das Distraktionsset weiterhin Schrauben (41) zur Implantation im Kiefer und Hülsen (37) umfasst, wobei die Hülsen (37) mit den Enden der Retentionsarme (27, 27', 28, 28') fest verbindbar, insbesondere verschweiß-, verpress- oder verklebbar sind und die Schrauben (41) und Hülsen (37) gelenkig, insbesondere mittels eines Kugelgelenks, verbindbar sind.

8. Distraktionsset nach Anspruch 7, **dadurch gekennzeichnet, dass** die Hülsen (37) einer halbkugelförmigen Innenraum (44) aufweisen und in Richtung der Öffnung (39) der Hülse (37) mehrere Laschen (36) mit nach innen gerichteten Nasen (35).

9. Distraktionsset nach einem der Ansprüche 7 oder 8, **dadurch gekennzeichnet, dass** die Hülsen (37) an ihrem der Öffnung (39) entgegengesetzten Ende ein Verbindungsstück (48) aufweisen, das der Verbindung mit den Enden der Retentionsarme (27, 27', 28, 28') dient.

10. Distraktionsset nach einem der Ansprüche 7 bis 9, **dadurch gekennzeichnet, dass** die Köpfe (43) der Schrauben (41) kugelförmig sind, die Schrauben (41) einen Hals (44) aufweisen, wobei der Hals (44) eine solche Länge aufweist, dass die Hülsen (37) gegenüber der Längsachse der Schrauben (41) um einen Winkel von wenigstens 10° und vorzugsweise wenigstens 20° schwenkbar sind.

11. Distraktionsset nach einem der vorangegangenen Ansprüche, **dadurch gekennzeichnet, dass** die Steigung der beiden Schraubgewinde (23, 23') der Vorrichtung gleich ist.

12. Distraktionsset nach einem der Ansprüche 4 bis 11, **dadurch gekennzeichnet, dass** die Einstellknöpfe (22) der Vorrichtung entlang ihres Umfangs wenigstens ein, vorzugsweise mehrere Einstelllöcher (24) aufweisen.

13. Distraktionsset nach einem der Ansprüche 7 bis 12, **dadurch gekennzeichnet, dass** die Schrauben (41) selbstbohrend sind.

14. Distraktionsset nach einem der vorangegangenen Ansprüche, **dadurch gekennzeichnet, dass** die Retentionsarme (27, 27', 28, 28') der Vorrichtung wenigstens so lang wie die Seitenstege (17, 18) und vorzugsweise wenigstens doppelt so lang sind.

15. Distraktionsset nach einem der Ansprüche 7 bis 14, **dadurch gekennzeichnet, dass** die Schrauben (41) und/oder die Hülsen (37) und/oder die Distraktionsvorrichtung aus Titan, einer Titanlegierung oder Edelstahl sind.

## Claims

1. A distraction set comprising a device for the distraction of at least two bone segments in the jaw, face, and skull area
having a guiding element (15; 55) that has a central bridge member (16; 56) and, on both sides of the central bridge member (16; 56), at least one lateral bridge member (17, 17', 18, 18'; 57, 57') extending at a right angle therefrom, having a first (20; 58) and a second (21; 59) threaded rod, each threaded rod (20, 21; 58, 59) having two threads (23, 23') running in opposite directions,
and having at least four retention bodies (25, 25', 26, 26'), wherein each retention body (25, 25', 26, 26') has at least one retention arm (27, 27', 28, 28'), and each retention body (25, 25', 26, 26') has a bore (31) with a female thread (32) for receiving a screw thread (23, 23') of a threaded rod (20, 21) and each retention body (25, 25', 26, 26') has another bore (30) through which a lateral bridge member (17, 17', 18, 18'; 57, 57') of the guiding element (15, 55) extends,
and wherein rotation of the threaded rods (20, 21) may cause the retention bodies (27, 27', 28, 28') connected to the threaded rod (20, 21) to be laterally spread apart in an outward direction.

2. The distraction set as claimed in claim 1, **characterised in that** the retention bodies (25, 25', 26, 26') of the device are stiff in themselves and the retention arms (27, 27', 28, 28') may be bent into any desired position suitable for their subsequent fixation onto the jawbone or the teeth.

3. The distraction set as claimed in any one of claims 1 or 2, **characterised in that** the device is mirror-symmetrical with respect to the longitudinal axis L.

4. The distraction set as claimed in any of the preceding claims, **characterised in that** the posterior end and the anterior end of the central bridge member (16) have integrated tabs (19, 19') and each threaded rod (20, 21) has an adjustment button (22) and the adjustment buttons (22) of the threaded rods (20, 21) are rotatably mounted on the tabs (19, 19').

5. The distraction set as claimed in any one of claims 2 to 4, **characterised in that** the threaded rods (20, 21) of the device are parallel to the lateral bridge members (17, 17', 19, 19'; 57, 57') and the latter are at a right angle with respect to the retention arms (27, 27', 28, 28').

6. The distraction set as claimed in any one of claims 2 to 4, **characterised in that** the threaded rods (20, 21) of the device are parallel to the lateral bridge members (17, 17', 19, 19'; 57, 57') and the latter are parallel to the retention arms (27, 27', 28, 28').

7. The distraction set as claimed in any one of claims 2 to 5, wherein the distraction set further comprises screws (41) for implantation in the jaw as well as sleeves (37), wherein the sleeves (37) may be firmly connected, in particular by welding, pressing, or bonding, to the ends of the retention arms (27, 27', 28, 28'), and wherein the screws (41) and the sleeves (37) may be interconnected in an articulated manner, in particular by means of a ball-and-socket joint.

8. The distraction set as claimed in claim 7, **characterised in that** the sleeves (37) have a hemispherical inner space (44) and are provided, in the direction of the opening (39) of the sleeve (37), with a plurality of tabs (36) having inwardly directed noses (35).

9. The distraction set as claimed in any one of claims 7 or 8, **characterised in that** the sleeves (37) have a connector (48) that is arranged on their ends opposite to the opening (39) and serves for establishing a connection with the ends of the retention arms (27, 27', 28, 28').

10. The distraction set as claimed in any one of claims 7 to 9, **characterised in that** the heads (43) of the screws (41) are spherical in shape and the screws (41) have each a neck (44), said neck (44) having such a length that the sleeves (37) may pivot by an angle of at least 10°, and preferably at least 20°, with respect to the longitudinal axes of the screws (41).

11. The distraction set as claimed in any of the preceding claims, **characterised in that** the pitches of the two screw threads (23, 23') of the device are identical.

12. The distraction set as claimed in any one of claims 4 to 11, **characterised in that** the adjustment knobs (22) of the device have at least one, and preferably a plurality of adjustment holes (24) arranged along their respective circumference.

13. The distraction set as claimed in any one of claims 7 to 12, **characterised in that** the screws (41) are self-tapping.

14. The distraction set as claimed in any of the preceding claims, **characterised in that** the retention arms (27, 27', 28, 28') of the device are at least as long as the lateral bridge members (17, 18) and preferably at least twice as long.

15. The distraction set as claimed in any one of claims 7 to 14, **characterised in that** the screws (41) and/or the sleeves (37) and/or the distraction device are made of titanium, a titanium alloy or stainless steel.

## Revendications

1. Kit de distraction, lequel comprend un dispositif destiné à la distraction d'au moins deux segments osseux situés dans la région des maxillaires, de la face et du crâne
avec un élément de guidage (15; 55) qui présente une pièce centrale (16; 56) et de chaque côté de ladite pièce centrale (16; 56) au moins une pièce latérale (17, 17', 18, 18'; 57, 57') s'étendant à angle droit, avec une première (20; 58) et une deuxième (21; 59) tige filetée, chacune des tiges filetées respectives (20, 21; 58, 59) présentant deux filetages contraires (23, 23'),
et avec au moins quatre corps de rétention (25, 25', 26, 26'), chaque corps de rétention (25, 25', 26, 26') présentant au moins un bras de rétention (27, 27', 28, 28'), chaque corps de rétention (25, 25', 26, 26') présentant une perforation (31) pourvue d'un filet intérieur (32) destiné à recevoir un filet de vissage (23, 23') d'une tige filetée (20, 21) et chaque corps de rétention (25, 25', 26, 26') présentant une autre perforation (30) à travers laquelle s'étend une pièce latérale (17, 17', 18, 18'; 57, 57') de l'élément de guidage (15, 55),
et une rotation des tiges filetées (20, 21) faisant en sorte que les corps de rétention (27, 27', 28, 28') reliées respectivement auxdites tiges filetées (20, 21) peuvent être écartées latéralement vers l'extérieur.

2. Kit de distraction selon la revendication 1, **caractérisé en ce que** les corps de rétention (25, 25', 26, 26') du dispositif sont rigides en soi et que les bras de rétention (27, 27', 28, 28') peuvent être recourbés dans la position souhaitée en vue d'être fixés ultérieurement à l'os maxillaire ou aux dents.

3. Kit de distraction selon la revendication 1 ou 2, **caractérisé en ce que** le dispositif présente une symétrie spéculaire par rapport à l'axe longitudinal L.

4. Kit de distraction selon l'une quelconque des revendications précédentes, **caractérisé en ce que** des pattes (19, 19') sont formées à l'extrémité postérieure et à l'extrémité antérieure de la pièce centrale (16) du dispositif et que chaque tige filetée (20, 21) présente un bouton de réglage (22) et que lesdits boutons de réglage (22) des tiges filetées (20, 21) sont montés sur les pattes (19, 19') de manière à pouvoir tourner.

5. Kit de distraction selon l'une quelconque des revendications 2 à 4, **caractérisé en ce que** les tiges filetées (20, 21) du dispositif s'étendent parallèlement aux pièces latérales (17, 17', 19, 19'; 57, 57') et que ces dernières s'étendent à angle droit par rapport aux bras de rétention (27, 27', 28, 28').

6. Kit de distraction selon l'une quelconque des revendications 2 à 4, **caractérisé en ce que** les tiges filetées (20, 21) du dispositif s'étendent parallèlement aux pièces latérales (17, 17', 19, 19'; 57, 57') et que ces dernières s'étendent parallèlement aux bras de rétention (27, 27', 28, 28').

7. Kit de distraction selon l'une quelconque des revendications 2 à 5, dans lequel ledit kit de distraction comprend en outre des vis (41) destinées à être implantées dans le maxillaire et des douilles (37), lesdites douilles (37) pouvant être assemblées de manière fixe, et ce en particulier par soudage, par compression ou par collage, aux extrémités des bras de rétention (27 , 27', 28, 28') et les vis (41) et douilles (37) pouvant être assemblées de manière articulée, en particulier au moyen d'une articulation à rotule.

8. Kit de distraction selon la revendication 7, **caractérisé en ce que** les douilles (37) présentent un espace intérieur (44) de forme hémisphérique et, en direction de l'ouverture (39) de la douille (37), plusieurs pattes (36) pourvues d'ergots (35) tournés vers l'intérieur.

9. Kit de distraction selon la revendication 7 ou 8, **caractérisé en ce que** les douilles (37) présentent à leur extrémité opposée à l'ouverture (39) une partie de raccord (48) qui sert à établir le lien avec les extrémités des bras de rétention (27, 27', 28, 28').

10. Kit de distraction selon l'une quelconque des revendications 7 à 9, **caractérisé en ce que** les têtes (43) des vis (41) sont de forme sphérique, que les vis (41) présentent un col (44), ledit col (44) présentant une longueur telle que les douilles (37) peuvent pivoter selon un angle d'au moins 10°, et de préférence d'au moins 20°, par rapport à l'axe longitudinal des vis (41).

11. Kit de distraction selon l'une quelconque des revendications précédentes, **caractérisé en ce que** le pas des deux filets de vissage (23, 23') du dispositif est le même.

12. Kit de distraction selon l'une quelconque des revendications 4 à 11, **caractérisé en ce que** les boutons de réglage (22) du dispositif présentent le long de leur circonférence au moins un, de préférence plusieurs orifices de réglage (24).

13. Kit de distraction selon l'une quelconque des revendications 7 à 12, **caractérisé en ce que** les vis (41) sont des vis autoforeuses.

14. Kit de distraction selon l'une quelconque des revendications précédentes, **caractérisé en ce que** les bras de rétention (27, 27', 28, 28') du dispositif sont au moins aussi longs que les pièces latérales (17, 18) et sont de préférence au moins deux fois plus longs que celles-ci.

15. Kit de distraction selon l'une quelconque des revendications 7 à 14, **caractérisé en ce que** les vis (41) et/ou les douilles (37) et/ou le dispositif de distraction sont en titane, en un alliage de titane ou en acier spécial.
